# FASCICULE DE BREVET EUROPEEN

(11) **EP 4 463 345 B1**
(45) Date de publication et mention de la délivrance du brevet: **24.12.2025**
(21) Numéro de dépôt: 22826138.4
(22) Date de dépôt: 21.11.2022
(51) Int. Cl.: B60T 17/22, B60T 13/66

(54) **PROCEDE DE GESTION DE L'ALIMENTATION ELECTRIQUE D'UN SYSTEME DE FREINAGE**
VERFAHREN ZUM VERWALTEN DER STROMVERSORGUNG EINES BREMSSYSTEMS
METHOD OF MANAGING THE ELECTRIC POWER SUPPLY OF A BRAKE SYSTEM

(30) Priorité: 10.01.2022 FR 2200133
(43) Date de publication de la demande: 20.11.2024
(73) Titulaire: Stellantis Auto SAS, 78300 Poissy (FR)
(72) Inventeur: PHAN HUY, Luan, 92220 BAGNEUX (FR); PERSEVAL, Herve, 91310 MONTLHERY (FR)
(74) Mandataire: PSIP
(86) Numéro de dépôt international: PCT/FR2022/052138
(87) Numéro de publication internationale: WO 2023/131751

(56) Documents cités:
- EP-A1- 1 747 129
- EP-A1- 2 231 449
- FR-A1- 3 065 932
- FR-A1- 3 071 460
- FR-A1- 3 073 186

## Description

La présente invention revendique la priorité de la demande française N°2200133 déposée le

Le domaine de l'invention concerne un procédé de gestion de l'alimentation électrique d'un système de freinage électro-hydraulique pour un véhicule, en particulier en cas de sollicitation d'un freinage autonome d'urgence.

Les systèmes avancés d'assistance à la conduite, couramment désignés par l'acronyme anglophone ADAS pour « Advanced Driver Assistance System », sont de plus en plus intégrés dans les véhicules automobiles et sont soumis à de nouvelles réglementations visant à améliorer leur sécurité. On peut citer les réglementations GSR pour « General Safety Regulation » et AEB pour « Autonomous Emergency Braking » en anglais dont le but est de garantir un niveau suffisant de fiabilité lors d'une prestation de freinage d'urgence. En particulier, il est nécessaire de garantir un niveau de tension d'alimentation électrique plus élevé qu'auparavant.

On connait de l'état de la technique le document FR3071460A1 qui enseigne un procédé de gestion électrique consistant à délester un équipement électrique en cas de sollicitation d'un freinage lorsque la puissance électrique disponible par le système d'alimentation est inférieure à un seuil donné. Cette gestion énergétique est intéressante mais nécessite d'être améliorée. En particulier, l'évaluation de la puissance disponible a un instant donné n'est pas toujours suffisamment précise pour garantir le niveau de tension recherché pour les besoins du freinage. En effet, cela implique d'effectuer le calcul juste avant le freinage et tout en garantissant une réactivité suffisante du délestage électrique.

Il existe donc un besoin de palier les problèmes précités. Un objectif de l'invention est de garantir le niveau de tension suffisant pour les prestations de freinage d'urgence, notamment pour les freinages autonomes. Un autre objectif de l'invention est d'améliorer la réactivité de l'opération du délestage.

Plus précisément, l'invention concerne un procédé de gestion de l'alimentation électrique d'un système de freinage électro-hydraulique pour un véhicule comportant également au moins un équipement électrique et un système d'alimentation électrique du système de freinage et de l'équipement électrique, le procédé comportant, lors d'une sollicitation du système de freinage, le délestage de l'alimentation d'au moins l'équipement électrique, et dans lequel le délestage est activé en cas de détection de l'activation d'une fonction de pré-remplissage d'un circuit hydraulique d'actionnement du système de freinage.

Selon une variante, la fonction de pré-remplissage est activée par un système d'assistance à la conduite du véhicule.

Selon une variante, le procédé comporte en outre une étape de détection d'un obstacle sur la route par le système d'assistance, une étape d'évaluation d'un besoin de freinage automatique, et la fonction de pré-remplissage est activée en cas de décision de l'activation du freinage automatique.

Selon une variante, le délestage est activé jusqu'à la fin de l'activation du freinage automatique.

Selon une variante, le procédé comporte en outre une commande d'augmentation de la tension d'alimentation du système de freinage en cas de détection de l'activation de la fonction de pré-remplissage.

Selon une variante, le délestage comporte la commande d'arrêt d'au moins ledit équipement électrique.

Selon une variante, la commande d'arrêt est une commande d'ouverture d'un commutateur électrique du système d'alimentation.

Selon une variante, la commande d'arrêt est une consigne de régime nul d'un ventilateur d'au moins ledit équipement électrique.

On envisage en outre un véhicule automobile comportant une unité de commande de gestion de l'alimentation électrique, un système de freinage électro-hydraulique, au moins un équipement électrique et un système d'alimentation électrique alimentant au moins le système de freinage et l'équipement électrique, dans lequel l'unité de commande est configurée pour mettre en œuvre le procédé de gestion selon l'un quelconque des modes de réalisation précédent.

L'invention est avantageuse car elle permet de garantir les conditions optimales d'alimentation électrique du système de frein lors de l'activation d'un système autonome de freinage d'urgence. Cela permet de respecter les nouvelles réglementations des systèmes électriques pour les fonctions de conduites autonomes.

D'autres caractéristiques et avantages de la présente invention apparaitront plus clairement à la lecture de la description détaillée qui suit comprenant des modes de réalisation de l'invention donnés à titre d'exemples nullement limitatifs et illustrés par les dessins annexés, dans lesquels :
[Fig.1] représente schématiquement une architecture de véhicule automobile prévue pour mettre en œuvre le procédé selon l'invention.
[Fig.2] représente un diagramme fonctionnel d'un mode de réalisation du procédé selon l'invention.

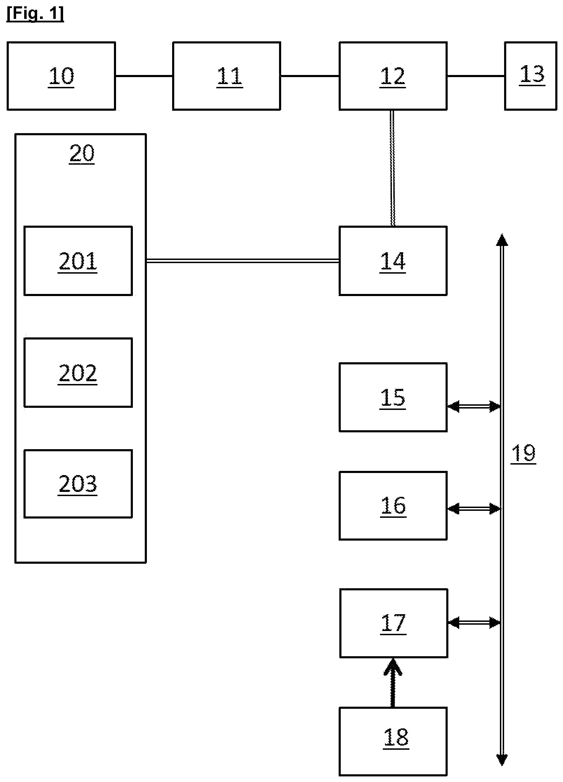

En figure 1, on présente un mode de réalisation préférentiel de l'invention pour un véhicule automobile dans lequel le groupe motopropulseur comprend une chaîne de traction comportant une machine de traction 10, une transmission automatisée 11 d'un couple moteur vers les roues 13 du véhicule, un système de frein robotisé 12, un système d'alimentation électrique 14 du véhicule, et une unité de commande de supervision 15 du véhicule.

La machine de traction 10 est un moteur thermique ou une machine électrique de traction. Pour un moteur thermique, la transmission automatisée 11 comporte classiquement un organe d'accouplement, de type embrayage, et une boite de vitesse automatisée. Pour un véhicule à traction entièrement électrique, la chaine de transmission 11 comporte généralement un réducteur de vitesse. L'invention s'applique à tout véhicule automobile à transmission automatisée.

Le système de frein 12 est un système de type électro-hydraulique. Il comporte donc un circuit hydraulique prévu pour la mise en pression de moyens de freinage des roues (étriers de frein, disque et plaquette) et un moyen de mise en pression du circuit hydraulique (maitre-cylindre et pompe électrique). La mise en pression peut être activée par la pédale de frein ainsi qu'un organe robotisé indépendamment d'une action du conducteur, par exemple au moyen de la pompe électrique. L'invention vise à garantir le respect des conditions d'alimentation électrique lors d'un freinage conformément aux normes GSR et AEB, en particulier le maintien de la tension électrique à un niveau d'exigence lors d'un freinage d'urgence pour les besoins de la pompe électrique de mise en pression, notamment.

Plus précisément, le système de frein 12 est activable automatiquement par un système de contrôle de stabilité du véhicule 16, bien connu de l'homme du métier et désigné par l'acronyme ESP, « Electronic Stability Program ». Un autre système d'activation du système de freinage 12 peut être un système avancé d'assistance à la conduite ADAS 17, mettant en œuvre par exemple une fonction de freinage automatique d'urgence. Le système 17 est prévu pour actionner la pompe électrique sur la base d'information délivrée par des capteurs d'environnement 18 et d'une fonction d'analyse de l'environnement et de pilotage autonome. Les systèmes 16 et 17 comportent chacun un calculateur et des mémoires configurés pour mettre en œuvre des fonctions de pilotage du système de frein 12 de manière à contrôler la trajectoire du véhicule par une pression de freinage aux roues.

En outre, le système de contrôle de stabilité 16 est apte à mettre en œuvre une fonction de pré-remplissage du circuit hydraulique afin d'anticiper l'activation d'un freinage et améliorer la réactivité du freinage en réponse à une consigne de freinage. Il s'agit d'une fonction bien connue de l'homme du métier et désignée par le terme anglophone « Prefill function ». Une telle fonction vise à piloter une montée en pression légère du circuit hydraulique du système de frein 12 à une pression cible, préalablement à une action de freinage. Le niveau de pression cible permet de rattraper les jeux entre les plaquettes et les disques de l'étrier de frein, sans pour autant appliquer une force de freinage sur les roues. Lorsque la fonction de pré-remplissage est activée, le système de contrôle de stabilité 16 actionne la pompe électrique pour générer la pression cible.

En particulier, la fonction de pré-remplissage est activable par le système ADAS 17, par exemple lorsqu'un radar détecte une situation anticipant une activation imminente de la fonction de freinage autonome d'urgence AEB. Le système ADAS 17 envoie alors une requête de pré-remplissage au système 16 ESP. Cette requête est activée entre 300ms et 600ms avant une action d'un freinage AEB.

On notera que la requête de pré-remplissage n'est pas activable par actionnement de la pédale de frein. Toutefois, on envisage que d'autres systèmes d'actionnement automatique du système de frein 12 sont aptes à activer une requête de pré-remplissage, par exemple une fonction de freinage automatique mise en œuvre par le système de contrôle de stabilité 16 ou l'unité de commande de supervision 15 du véhicule.

Par ailleurs, le système d'alimentation électrique 14 comporte un (ou plusieurs) générateur(s) d'énergie délivrant une tension électrique et un courant électrique aux systèmes du véhicule, notamment la pompe électrique du système de frein 12 et les calculateurs des systèmes électroniques du véhicules, notamment les systèmes 15 à 18. Un générateur peut être une batterie, un alternateur entrainé par un moteur thermique, une machine électrique de traction, ou un convertisseur de tension de type DC/DC. Le système d'alimentation 14 comporte des commutateurs permettant de connecter et déconnecter sélectivement une ligne d'alimentation électrique d'un système du groupe motopropulseur et des équipements électriques.

Par ailleurs, l'unité de commande 15 est un dispositif à calculateur, appelé également ECU pour « Electronic Control Unit » ou bien VCU pour « Vehicule Control Unit » selon les acronymes anglophones. Sa fonction est de superviser les systèmes du véhicule, de collecter les informations du véhicule et de communiquer en permanence aux systèmes des informations d'état et commandes pour leur coordination.

Dans le cadre de la gestion de l'alimentation électrique, l'unité de commande 15 supervise la gestion électrique du système d'alimentation électrique 14 et les équipements électriques du véhicule (qui seront détaillés par la suite à titre d'exemple) et des moyens de contrôle de leur alimentation électrique pour mettre en œuvre une fonction de délestage. A cet effet, le groupe motopropulseur comporte des moyens de communication 19, par exemple un bus de communication de type CAN (« Controler Area Network » en anglais), ou un bus de communication LIN (« Local Interconnect Network » en anglais).

Le délestage consiste à arrêter la consommation électrique d'un équipement du véhicule. Le délestage est mis en œuvre par l'unité de commande 15 (fonction de gestion électrique) en commandant l'ouverture d'un commutateur électrique du système d'alimentation 14, ou bien en pilotant une consigne d'arrêt d'un équipement ou de limitation de la puissance de fonctionnement d'un équipement, par exemple commande de marche/arrêt ou commande de limitation d'un régime de fonctionnement d'un ventilateur selon l'équipement visé.

Plus précisément, le système avancé d'assistance à la conduite ADAS 17 est prévu pour mettre en œuvre des fonctions automatiques de contrôle de trajectoire, notamment la fonction de freinage d'urgence AEB en cas de détection d'un obstacle. A cet effet, le véhicule comporte un dispositif à capteurs 18 pour l'observation de l'environnement du véhicule, tel un dispositif de type radar, lidar, de visualisation à caméra par exemple, coopérant avec le système ADAS 17. Le système ADAS 17 comporte des moyens d'analyse et traitement de données issues des capteurs pour évaluer la situation de roulage et l'environnement de la route afin d'activer automatiquement des fonctions d'assistance à la conduite, d'alerte et contrôle de trajectoire du véhicule. Parmi ces fonctions on peut citer la détection et alerte de présence d'obstacles, le freinage d'urgence autonome AEB, le maintien du véhicule dans la voie de roulage, la régulation de vitesse du véhicule, le maintien d'une distance de sécurité, le dépassement d'un véhicule, ou bien encore le stationnement automatique.

En outre, le véhicule comporte des équipements électriques 20 alimentés électriquement par le système d'alimentation 14. Parmi ces équipements 20, le véhicule comporte des équipements de prestation thermique habitacle 201, des équipements de visibilité 202 du véhicule et l'équipement 203 appelé groupe moto-ventilateur du groupe motopropulseur. L'unité de commande 15 du véhicule est apte à délester électriquement l'un seulement, une sélection d'équipements parmi les équipements 20 ou tous les équipements 20, en cas de détection d'une requête de pré-remplissage du circuit hydraulique du système de frein conformément au procédé selon l'invention. Les équipements de prestation thermique de l'habitacle 201 comprennent un compresseur de climatisation, un pulseur de climatisation, un dispositif de chauffage des sièges, un dispositif de ventilation de l'habitacle, un dispositif de chauffage de nuque. Les équipements de visibilité 202 comprennent un dispositif de chauffage et ventilation du pare-brise avant et arrière. Le groupe moto-ventilateur 203 est destiné au refroidissement d'un moteur thermique, et/ou d'une machine électrique de traction et/ou d'un condenseur de climatisation.

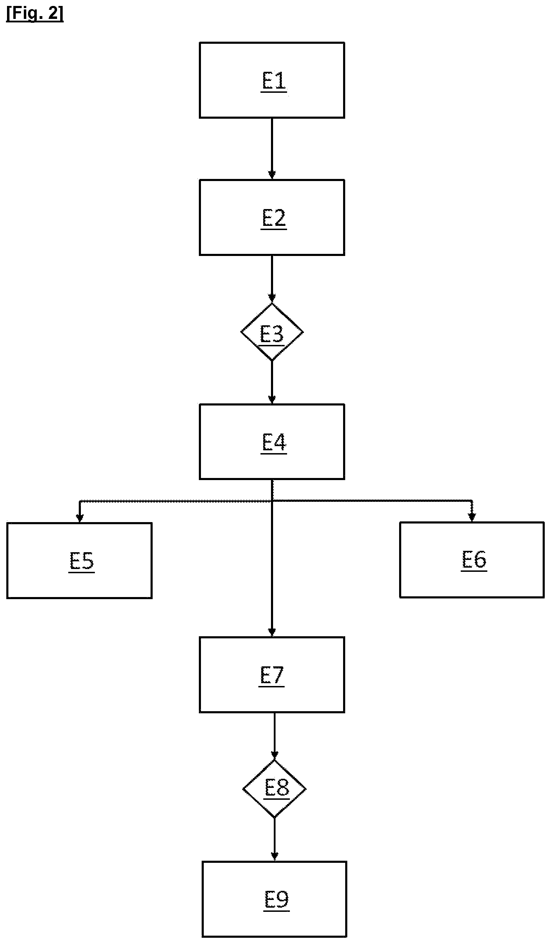

En figure 2, on a représenté un diagramme fonctionnel du procédé de gestion de l'alimentation électrique conformément à l'invention. Le procédé déleste électriquement un ou plusieurs des équipements électriques du véhicule pour les besoins du système de frein lorsqu'il est sollicité pour un freinage d'urgence activé par le système avancé d'assistance à la conduite ADAS du véhicule. Le délestage s'active à chaque freinage d'urgence indépendamment de la puissance électrique consommée par les équipements et systèmes du véhicule. Le délestage est activé de manière anticipée à la commande de freinage d'urgence.

Plus précisément, à une première étape E1, le véhicule est en situation de roulage. Le système ADAS est activé, notamment la fonction de freinage autonome d'urgence AEB, ou tout autre type de fonction habilitée à activer une action de freinage.

A une deuxième étape E2, le système ADAS détecte un obstacle dans l'environnement du véhicule. Dès cet instant, le système ADAS exécute une évaluation E3 de la situation de roulage pour déterminer si un freinage imminent est nécessaire. L'évaluation est exécutée en fonction de programmes ADAS configurés en mémoire du véhicule. Par exemple, le système ADAS évalue la distance de l'obstacle et la vitesse d'approche de l'obstacle.

A une quatrième étape E4, suite à l'évaluation E3, le système ADAS détermine le besoin d'un freinage d'urgence. Par exemple, une situation peut être que la distance entre le véhicule et l'obstacle est devenue inférieure à un une distance de sécurité déterminée. A cette étape E4, le système ADAS active une requête de pré-remplissage du circuit hydraulique du système de frein. Cette requête est émise à travers le bus de communication du véhicule. Lors de la détection de cette requête, le système de frein pilote une montée en pression du circuit hydraulique à une pression cible pour compenser les jeux entre les plaquettes et les disques de frein. Le pré-remplissage anticipe l'opération de freinage et améliore la réactivité du freinage en cas de sollicitation.

Dans d'autres situations de roulage, on envisage que la requête de pré-remplissage soit générée automatiquement par le calculateur du système de frein ou par l'unité de commande de supervision du véhicule en fonction d'informations de roulage issues de capteurs du véhicule ou tout autres systèmes du véhicule

Parallèlement, il est prévu de préférence une étape, non représentée en figure 2, de génération d'une alerte à destination du conducteur. Un signal d'alerte « obstacle » est émis via une interface homme machine pour informer le conducteur, par exemple par signal sonore, visuel ou haptique.

Ensuite, conformément au procédé selon l'invention, en cas de détection de la requête de pré-remplissage, le procédé comporte une cinquième étape de délestage E5 d'un (ou plusieurs) équipement(s) électrique(s) du véhicule, parmi les équipements de prestation thermique habitacle, de visibilité et le groupe moto-ventilateur. Le délestage E5 est commandé par l'unité de commande de supervision du véhicule lorsqu'elle détecte la requête de pré-remplissage E4. Le délestage comporte une commande de déconnexion électrique du (ou des) équipement(s) électrique(s), ou tout type de commande visant à réduire la consommation électrique prélevée sur le système d'alimentation. Le délestage est activé entre 300ms et 600ms avant l'activation du freinage. Le délestage E5 est prévu pour être exécuté uniquement durant la durée du freinage d'urgence. En cas d'annulation du freinage d'urgence, le délestage est annulé également.

En parallèle, le procédé comporte préférentiellement une sixième étape E6 d'augmentation de la tension électrique délivrée par le système d'alimentation au système de frein, dit également « Boost Command » selon la terminologie anglaise. La commande d'augmentation de la tension électrique est pilotée par le dispositif de gestion électrique du générateur de tension. Cette commande vise à augmenter provisoirement la tension électrique afin de garantir un bon fonctionnement du système de frein pendant l'action de freinage autonome d'urgence AEB. Cette étape n'est toutefois pas obligatoire pour l'exécution du procédé de gestion électrique selon l'invention.

Ensuite, le procédé comporte une septième étape E7 de commande du freinage d'urgence. A cet instant, le délestage est activé et effectif. Le système de frein commande une pression de freinage pour éviter l'obstacle. La pompe électrique du système hydraulique est activée pour augmenter la pression. Les conditions électriques assurant le bon fonctionnement du système de frein sont respectées grâce à l'action de délestage. Le véhicule décélère conformément à l'action de freinage d'urgence.

A une huitième étape E8, on détecte que l'opération de freinage est terminée. Le délestage électrique n'est plus nécessaire. La détection de fin de freinage est déclenchée par le système d'assistance à la conduite, le système de freinage ou bien l'unité de commande de supervision.

A une neuvième étape E9, l'unité de commande de supervision pilote la fin du délestage E5 et la fin de l'augmentation de la tension électrique E6. Le délestage est ainsi piloté provisoirement, uniquement durant la durée de l'activation du freinage d'urgence, d'une durée de l'ordre de quelques secondes, entre 2 et 5 secondes selon la situation de freinage d'urgence. Le délestage électrique est ainsi presque imperceptible pour l'utilisateur car il affecte peu le ressenti de la prestation thermique et de visibilité. De même, le délestage du groupe moto-ventilateur est imperceptible par le conducteur pour cette courte durée.

## Revendications

1. Procédé de gestion de l'alimentation électrique d'un système de freinage électro-hydraulique (12) pour un véhicule comportant également au moins un équipement électrique (20) et un système d'alimentation électrique (14) du système de freinage (12) et de l'équipement électrique (20), le procédé comportant, lors d'une sollicitation du système de freinage (E7), le délestage (E5) de l'alimentation d'au moins l'équipement électrique (20), **caractérisé en ce que** le délestage (E5) est activé en cas de détection de l'activation (E4) d'une fonction de pré-remplissage d'un circuit hydraulique d'actionnement du système de freinage (12).

2. Procédé de gestion selon la revendication 1, **caractérisé en ce que** la fonction de pré-remplissage est activée par un système d'assistance à la conduite (17) du véhicule.

3. Procédé de gestion selon la revendication 2, **caractérisé en ce qu'**il comporte en outre une étape de détection (E2) d'un obstacle sur la route par le système d'assistance à la conduite (17), une étape d'évaluation d'un besoin de freinage automatique (E3), et **en ce que** la fonction de pré-remplissage est activée (E4) en cas de décision de l'activation du freinage automatique.

4. Procédé de gestion selon la revendication 3, **caractérisé en ce que** le délestage (E5) est activé jusqu'à la fin de l'activation du freinage automatique (E8).

5. Procédé de gestion selon l'une quelconque des revendications 1 à 4, **caractérisé en ce qu'**il comporte en outre une commande d'augmentation de la tension d'alimentation (E6) du système de freinage (12) en cas de détection de l'activation (E4) de la fonction de pré-remplissage.

6. Procédé de gestion selon l'une quelconque des revendications 1 à 5, **caractérisé en ce que** le délestage (E5) comporte la commande d'arrêt d'au moins ledit équipement électrique (20).

7. Procédé de gestion selon la revendication 6, **caractérisé en ce que** la commande d'arrêt est une commande d'ouverture d'un commutateur électrique du système d'alimentation (14).

8. Procédé de gestion selon la revendication 6, **caractérisé en ce que** la commande d'arrêt est une consigne de régime nul d'un ventilateur d'au moins ledit équipement électrique (20).

9. Véhicule automobile comportant une unité de commande (15) de gestion de l'alimentation électrique, un système de freinage électro-hydraulique (12), au moins un équipement électrique (20) et un système d'alimentation électrique (14) alimentant au moins le système de freinage (12) et l'équipement électrique (20), **caractérisé en ce que** l'unité de commande (15) est configurée pour mettre en œuvre le procédé de gestion selon l'une quelconque des revendications 1 à 8.

## Patentansprüche

1. Verfahren zur Steuerung der Stromversorgung eines elektrohydraulischen Bremssystems (12) für ein Fahrzeug, das mindestens ein elektrisches Gerät (20) und ein Stromversorgungssystem (14) für das Bremssystem (12) und das elektrische Gerät (20) umfasst, wobei das Verfahren bei Betrieb des Bremssystems (E7) einen Lastabwurf (E5) der Stromversorgung zumindest des elektrischen Geräts (20) umfasst, **dadurch gekennzeichnet, dass** der Lastabwurf (E5) aktiviert wird, wenn die Aktivierung (E4) einer Vorfüllfunktion eines Hydraulikkreises zur Betätigung des Bremssystems (12) erkannt wird.

2. Steuerungsverfahren nach Anspruch 1, **dadurch gekennzeichnet, dass** die Vorfüllfunktion durch ein Fahrerassistenzsystem (17) des Fahrzeugs aktiviert wird.

3. Managementverfahren nach Anspruch 2, **dadurch gekennzeichnet, dass** es zusätzlich einen Schritt zur Erkennung (E2) eines Hindernisses auf der Fahrbahn durch das Fahrassistenzsystem (17), einen Schritt zur Bewertung der Notwendigkeit einer automatischen Bremsung (E3) und die Aktivierung der Vorfüllfunktion (E4) umfasst, wenn die automatische Bremsung aktiviert wird.

4. Managementverfahren nach Anspruch 3, **dadurch gekennzeichnet, dass** der Lastabwurf (E5) bis zum Ende der Aktivierung der automatischen Bremsung (E8) aktiviert bleibt.

5. Managementverfahren nach einem der Ansprüche 1 bis 4, **dadurch gekennzeichnet, dass** es zusätzlich einen Befehl zur Erhöhung der Versorgungsspannung (E6) des Bremssystems (12) umfasst, wenn die Aktivierung (E4) der Vorfüllfunktion erkannt wird.

6. Managementverfahren nach einem der Ansprüche 1 bis 5, **dadurch gekennzeichnet, dass** der Lastabwurf (E5) den Befehl zum Abschalten zumindest der elektrischen Geräte (20) umfasst.

7. Steuerungsverfahren nach Anspruch 6, **dadurch gekennzeichnet, dass** der Stoppbefehl ein Befehl zum Öffnen eines elektrischen Schalters des Stromversorgungssystems (14) ist.

8. Steuerungsverfahren nach Anspruch 6, **dadurch gekennzeichnet, dass** der Stoppbefehl ein Nulldrehzahl-Sollwert eines Lüfters zumindest des elektrischen Geräts (20) ist.

9. Kraftfahrzeug mit einer Steuereinheit (15) zur Steuerung der elektrischen Stromversorgung, einem elektrohydraulischen Bremssystem (12), mindestens einem elektrischen Gerät (20) und einem Stromversorgungssystem (14), das zumindest das Bremssystem (12) und das elektrische Gerät (20) versorgt, **dadurch gekennzeichnet, dass** die Steuereinheit (15) zur Durchführung des Steuerungsverfahrens nach einem der Ansprüche 1 bis 8 konfiguriert ist.

## Claims

1. Method for managing the electrical power supply of an electro-hydraulic braking system (12) for a vehicle also comprising at least one electrical equipment (20) and an electrical power supply system (14) for the braking system (12) and the electrical equipment (20), the method comprising, when the braking system (E7) is used, load shedding (E5) of the power supply to at least the electrical equipment (20), **characterized in that** the load shedding (E5) is activated in the event of detection of the activation (E4) of a pre-filling function of a hydraulic circuit for actuating the braking system (12).

2. Management method according to claim 1, **characterized in that** the pre-filling function is activated by a driver assistance system (17) of the vehicle.

3. Management method according to claim 2, **characterized in that** it further comprises a step of detection (E2) of an obstacle on the road by the driving assistance system (17), a step of evaluation of a need for automatic braking (E3), and **in that** the pre-filling function is activated (E4) in the event of a decision to activate automatic braking.

4. Management method according to claim 3, **characterized in that** the load shedding (E5) is activated until the end of the activation of automatic braking (E8).

5. Management method according to any one of claims 1 to 4, **characterized in that** it further comprises a command to increase the supply voltage (E6) of the braking system (12) in the event of detection of the activation (E4) of the pre-filling function.

6. Management method according to any one of claims 1 to 5, **characterized in that** the load shedding (E5) comprises the command to stop at least said electrical equipment (20).

7. Management method according to claim 6, **characterized in that** the stop command is a command to open an electrical switch of the power supply system (14).

8. Management method according to claim 6, **characterized in that** the stop command is a zero speed setpoint of a fan of at least said electrical equipment (20).

9. Motor vehicle comprising a control unit (15) for managing the electrical power supply, an electro-hydraulic braking system (12), at least one piece of electrical equipment (20) and an electrical power supply system (14) supplying at least the braking system (12) and the electrical equipment (20), **characterized in that** the control unit (15) is configured to implement the management method according to any one of claims 1 to 8.
